# EUROPÄISCHE PATENTSCHRIFT

(11) **EP 4 074 160 B1**
(45) Veröffentlichungstag und Bekanntmachung des Hinweises auf die Patenterteilung: **27.03.2024**
(21) Anmeldenummer: 21215639.2
(22) Anmeldetag: 17.12.2021
(51) Int. Cl.: A01D 43/08, A01D 43/073, A01D 41/127, A01F 25/16, A01D 41/12

(54) **VERFAHREN ZUM EINSTELLEN EINER FÜLLHÖHE IN EINEM BEHÄLTNIS**
METHOD FOR OPERATING A FILLING HEIGHT IN A CONTAINER
PROCÉDÉ DE RÉGLAGE D'UN NIVEAU DE REMPLISSAGE DANS UN RÉCIPIENT

(30) Priorität: 14.04.2021 DE 102021109292
(43) Veröffentlichungstag der Anmeldung: 19.10.2022
(73) Patentinhaber: CLAAS E-Systems GmbH, 49201 Dissen (DE)
(72) Erfinder: Töniges, Torben, 33602 Bielefeld (DE)
(74) Vertreter: CLAAS Gruppe

(56) Entgegenhaltungen:
- EP-A1- 2 020 174
- DE-A1-102011 120 402

## Beschreibung

Die vorliegende Erfindung betrifft ein Verfahren zum Einstellen einer Füllhöhe in einem Behältnis zumindest eines landwirtschaftlichen Transportfahrzeugs oder gezogenen Transportwagens gemäß dem Oberbegriff des Anspruches 1. Weiterhin betrifft die Erfindung ein landwirtschaftliches System zur Durchführung des Verfahrens gemäß dem Oberbegriff des Anspruches 15.

Ein Verfahren der eingangs genannten Art ist aus der DE 10 2011 005 400 B4 bekannt.

Die DE 10 2011 005 400 B4 beschreibt eine Anordnung zur Abschätzung des Füllgrades beim automatisierten Überladen landwirtschaftlichen Ernteguts von einer Erntemaschine auf ein Transportfahrzeug mittels eines mathematischen Modells. Hierbei werden einer Beladestrategie folgend einzelne Zellen im Ladebehälter des Transportwagens bis zu einer bestimmten Höhe befüllt, bevor die nächste Zelle befüllt wird. Mittels eines Durchsatzsensors zur Erfassung des jeweiligen Erntegutdurchsatzes der Erntemaschine wird das Überladen koordiniert. Eine Rechnereinrichtung der Erntemaschine wird mit einer manuell eingegebenen oder automatisch erfassten Information hinsichtlich der Abmessungen des Ladebehälters beaufschlagt. Anhand der Abmessungen des Ladebehälters werden die Beladestrategie mit ihren Beladepunkten und die einzelnen Zellen eines über den Ladebehälter gelegten virtuellen Gitters für eine maximale Befüllung festgelegt.

Weiterhin ist aus der DE 10 2016 214 329 A1 ein Verfahren zum automatisierten Umladen von Erntegut durch eine Erntemaschine auf ein Transportfahrzeug bekannt, wonach mittels eines Bildgebungsverfahrens wiederholt Füllstände eines Ladebehälters des Transportfahrzeugs bestimmt werden. Anhand der detektierten Füllstände wird eine Überladevorrichtung der Erntemaschine angesteuert, um die volle Kapazität des Ladebehälters des Transportfahrzeugs auszuschöpfen.

Ferner ist ein Verfahren mit den Merkmalen des Oberbegriffs des Anspruchs 1 aus der EP 2 020 174 A1 bekannt.

Als optimale Befüllung des Ladebehälters wird die Ausschöpfung der maximalen Kapazität beim Überladen angesehen. Der Vorgang des Überladens von Erntegut von der Erntemaschine auf das Transportfahrzeug soll dabei mit geringstmöglichen Erntegutverlusten, beispielsweise Spritzverlusten, erfolgen. Unberücksichtigt bleiben dabei jedoch weitere Verlustquellen, die auf den eigentlichen Transport des Erntegutes vom bearbeiteten Feld zu einer Abladestelle, wie beispielsweise einem Silo, zurückgehen.

Der Erfindung liegt somit das Problem zugrunde, das Verfahren zum Einstellen einer Füllhöhe in einem Behältnis derart auszugestalten und weiterzubilden, dass eine Optimierung der zu realisierenden Füllhöhe durch ein Überladesystem vor dem Hintergrund einer Minimierung von Transportverlusten durchgeführt wird.

Das obige Problem wird bei einem Verfahren gemäß dem Oberbegriff von Anspruch 1 durch die Merkmale des kennzeichnenden Teils von Anspruch 1 gelöst. Vorteilhafte Weiterbildungen sind Gegenstand der Unteransprüche.

Gemäß dem Anspruch 1 wird ein Verfahren zum Einstellen einer Füllhöhe in einem Behältnis zumindest eines landwirtschaftlichen Transportfahrzeugs oder gezogenen Transportwagens vorgeschlagen, in welches von zumindest einer selbstfahrenden Erntemaschine aufgenommenes Erntegut mittels eines Überladesystems bis zum Erreichen einer vorgegebenen Füllhöhe überladen und von dem Transportfahrzeug oder dem Transportwagen zu einer entfernten Abladestelle transportiert wird, wobei eine von der Erntemaschine in das Behältnis überladene Erntegutmenge durch zumindest eine an der Erntemaschine angeordnete Messeinrichtung bestimmt und an eine Steuerungseinheit übermittelt wird. Erfindungsgemäß ist vorgesehen, dass eine von dem Transportfahrzeug oder dem Transportwagen an der Abladestelle übergebene Erntegutmenge durch eine weitere Messeinrichtung bestimmt und an die Steuerungseinheit zur Bestimmung einer Mengendifferenz zwischen der aufgenommenen Erntegutmenge und der übergebenen Erntegutmenge übermittelt wird und dass in Abhängigkeit von der bestimmten Mengendifferenz zumindest ein Steuersignal generiert wird, durch welches die von dem Überladesystem realisierte Füllhöhe angepasst wird.

Wesentlich ist die grundsätzliche Überlegung, dass gemäß dem Verfahren zwischen einem Überladezeitpunkt und einem Überladeort auf einem zu bearbeitenden Feld und einer anzufahrenden entfernten Abladestelle, wie beispielsweise einem Silo auf einer Hofstätte oder einer Getreidemühle, wo das Transportfahrzeug oder der Transportwagen entladen wird, auftretende Transportverluste bestimmt werden, um diese bei der Anpassung der von dem Überladesystem, insbesondere automatisch, realisierten Füllhöhe bei einem nachfolgenden Überladevorgang auf das Transportfahrzeug oder den Transportwagen zu berücksichtigen. Transportverluste in der Form von Rieselverlusten treten während des Transports des Erntegutes vom Feld zu der Abladestelle auf, weil die durch das Überladesystem realisierte Füllhöhe nicht die Guteigenschaften in entsprechender Weise berücksichtigt hat. So wird der Schüttkegel mit zunehmender Fahrtdauer beispielsweise flacher und breiter. Daher können die beim Fahren auftretenden Erschütterungen dazu führen, dass Erntegut seitlich über die Bordwand rieselt, da sich die Form des Schüttkegels in dem Behältnis während der Fahrt ändert.

Bei der selbstfahrenden Erntemaschine kann es sich insbesondere um einen Mähdrescher oder einen Feldhäcksler handeln, welche ein Überladesystem aufweisen, welches zum Überladen von Erntegut in Form von Schüttgut oder schüttgutähnlichem Erntegut eingerichtet ist.

Zur Bestimmung der Überlademenge kann ein Durchsatz der von der Erntemaschine aufgenommenen Erntegutmenge durch die Messeinrichtung bestimmt werden. Durchsatzmessungen können, in Abhängigkeit von der Art der Erntemaschine, an verschiedenen Stellen im Bearbeitungsprozess erfolgen. Eine Vorrichtung und ein Verfahren zur Durchsatzmessung an einem selbstfahrenden Feldhäcksler ist beispielsweise in der DE10 2015 101 662 A1 beschrieben. Eine Vorrichtung und ein Verfahren zur Bestimmung der Durchsatzleistung eines selbstfahrenden Mähdreschers ist beispielsweise aus der DE10 2016 118 560 A1 bekannt.

Alternativ oder zusätzlich kann zur Bestimmung der Überlademenge eine in einem Speicherbehältnis der Erntemaschine temporär aufgenommene Erntegutmenge durch die Messeinrichtung bestimmt werden. Dies kann insbesondere bei einer als Mähdrescher ausgeführten Erntemaschine vorgesehen sein, welche über ein als Korntank ausgeführtes Speicherbehältnis verfügt. Das Überladen des während des Ernteprozesses aufgenommenen Erntegutes erfolgt dabei diskontinuierlich.

Gemäß einer weiteren Ausführungsform kann die von dem Behältnis aufgenommene Überlademenge unmittelbar nach dem Abschluss des Überladevorganges durch eine an dem Transportfahrzeug oder dem Transportwagen angeordnete Messeinrichtung bestimmt werden. Dabei ist mit unmittelbar nach dem Abschluss des Überladevorganges gemeint, dass die Messeinrichtung die Überlademenge bestimmt, bevor sich das Transportfahrzeug oder der gezogene Transportwagen signifikant von der Überladestelle bzw. der letzten Überladeposition entfernt hat. Dies ist insbesondere bei einer als Feldhäcksler ausgeführten Erntemaschine relevant, da bei dieser der Überladevorgang kontinuierlich während des Erntevorganges erfolgt.

Insbesondere kann die Bestimmung der an der Abladestelle abgeladenen Erntegutmenge mittels einer optischen Sensoranordnung und/oder einer Sensoranordnung zur Bestimmung der Gewichtskraft als weitere Messeinrichtung durchgeführt werden. Vorzugsweise kann die weitere Messeinrichtung als eine Fahrzeugwaage ausgeführt sein, die zur Erfassung des Gewichts des Transportfahrzeugs oder des Transportwagens eingerichtet ist. Eine optische Sensoranordnung kann als ein Kamerasystem ausgeführt sein.

Gemäß einer Weiterbildung kann während des Transportes des Erntegutes vom Überladepunkt auf einem Feld zu der Abladestelle das Fahrverhalten des Transportfahrzeugs oder des gezogenen Transportwagens beeinflussende Parameter sensorisch erfasst und protokolliert werden. Hierzu kann mittels eines Positionsortungssystems eine zwischen Feld und Abladestelle abgefahrene Wegstrecke erfasst werden. Der Überladepunkt markiert die jeweilige Überladestelle bzw. die letzte Überladeposition.

Insbesondere kann als ein das Fahrverhalten beeinflussender Parameter die Fahrgeschwindigkeit und/oder die Beschaffenheit einer befahrenen Wegstrecke zwischen Feld und Ablagestelle erfasst werden. Fahrgeschwindigkeit und Streckenverlauf haben einen maßgeblichen Einfluss wie sich das in dem Behältnis befindliche Erntegut während der Fahrt vom Feld zur Abladestelle verhält. Bodenunebenheiten können, insbesondere bei nicht angepasster Fahrgeschwindigkeit zu Erntegutverlusten führen. Ein starkes Verzögern des Transportfahrzeugs oder des von einem Traktor gezogenen Transportwagens können ebenfalls zu Erntegutverlusten führen. Dabei fallen Erntegutverluste aufgrund des Fahrverhaltens umso höher aus, je stärker sich die realisierte Füllhöhe beim Überladen an der maximal erreichbaren Füllhöhe in dem jeweiligen Behältnis orientiert hat.

Gemäß einem weiteren Aspekt der Erfindung kann die Erntemaschine eine Sensoreinrichtung umfassen, mittels der zumindest eine Ernteguteigenschaft des zu überladenden Erntegutes bestimmt wird, die Einfluss auf einen sich im Behältnis ausbildenden Schüttkegel hat. Hierzu zählen beispielsweise die Feuchtigkeit des Erntegutes, oder, im Fall eines Feldhäckslers, auch die Schnittlänge des Erntegutes. Beim Fahren auf einem Feldweg sowie einer Straße enden die Flanken eines sich beim Überladen einstellenden Schüttkegels immer unterhalb der Bordwand des Behältnisses des Transportfahrzeugs bzw. des Transportwagens, wobei der Abstand zwischen Schüttkegel und Bordwand umso kleiner sein kann, je feuchter das Erntegut ist, da die Rieseleigenschaft mit zunehmender Feuchte sinkt. Hierdurch steigt die Wahrscheinlichkeit des Auftretens von Rieselverlusten.

Gemäß einer Weiterbildung kann bei einem Detektieren einer zunehmenden Mengendifferenz zwischen dem Überladeort auf dem Feld und dem Abladeort die vorgegebene Füllhöhe kontinuierlich reduziert werden, bis zu der das Überladesystem das Behältnis befüllt. Die Erntegutverluste bzw. Rieselverluste während eines Transportvorganges können somit erkannt und ein entsprechender Vorschlag für eine Änderung der Füllhöhe generiert werden, die an die Erntemaschine und/oder das Transportfahrzeug bzw. den Traktor, der den Transportwagen zieht, übermittelt werden. Bevorzugt kann vorgesehen sein, dass in der Steuerungseinheit ein einstellbarer Schwellwert als Toleranzgrenze für Rieselverluste hinterlegt wird, welcher bei der Beurteilung herangezogen werden kann, ob eine Anpassung der vorgegebenen Füllhöhe bei einer Detektion einer Mengendifferenz durchgeführt wird.

Gemäß einer Weiterbildung kann bei einer erstmaligen Befüllung des Behältnisses durch das Überladesystem der Erntemaschine eine maximale Füllhöhe des Behältnisses bestimmt und als vorgegebene Füllhöhe voreingestellt werden. Diese voreingestellte Füllhöhe kann nach jedem erfolgten Abladevorgang entsprechend der detektierten Mengendifferenz prozentual zur maximalen Füllhöhe des Behältnisses angepasst werden. Hierbei bildet die maximale Füllhöhe im Behältnis, welche in der Regel die optimale Befüllmenge des Behältnisses wiedergibt, den Ausgangspunkt für die nachfolgende Anpassung der durch das Überladesystem zu realisierenden Füllhöhe, um Rieselverluste zu minimieren.

Gemäß einer bevorzugten Ausführung kann bei einem Einsatz mehrerer Transportfahrzeuge und/oder Transportwagen für den Abtransport in einer ersten zeitlich begrenzten Phase die jeweilig bestimmten Mengendifferenzen der Transportfahrzeuge bzw. Transportwagen gemittelt und zur Anpassung der Füllhöhe für alle Transportfahrzeuge bzw. Transportwagen verwendet werden. Diese Vorgehensweise kann insbesondere bei einem Einsatz gleichartiger oder identisch ausgeführter Transportfahrzeuge und/oder Transportwagen sinnvoll sein.

Bevorzugt kann bei einem Einsatz mehrerer Transportfahrzeuge und/oder Transportwagen eine Spezifikation eines jeden Transportfahrzeugs bzw. jedes Transportwagens durch eine Sensoreinrichtung von der Erntemaschine sowie einer zusätzlichen Sensoranordnung an der Abladestelle individuell bestimmt werden, so dass die Anpassung der Füllhöhe individuell für jedes Transportfahrzeug bzw. jeden Transportwagen durchgeführt wird. Mit einer Spezifikation eines Transportfahrzeugs bzw. eines Transportwagens ist das Detektieren zumindest einer spezifischen Eigenschaft gemeint, welche ein eindeutiges Wiedererkennen des jeweiligen Transportfahrzeugs bzw. Transportwagens ermöglicht, um die individuelle Anpassung der Füllhöhe zu ermöglichen. Neben beispielsweise einer rein optischen Erkennung des Transportfahrzeugs bzw. Transportwagens, beispielsweise durch das Überladesystem der Erntemaschine, kann auch das Auslesen einer Kennzeichnung, beispielsweise eines RFID-Chips oder dergleichen, an dem Transportfahrzeug bzw. Transportwagen vorgesehen sein. Die individuelle Bestimmung der jeweiligen Füllhöhe für ein einzelnes Transportfahrzeug bzw. einen einzelnen Transportwagen ist aufwendiger, ermöglich es aber besser die Einflüsse zu berücksichtigen, die sich aus einem individuellen Fahrverhalten eines Fahrers und/oder gegebenenfalls abweichend befahrenen Wegstrecken und/oder sich ändernden Fahrstreckenkonditionen ergeben können.

Weiterhin können die von der Messeinrichtung der Erntemaschine und der weiteren Messeinrichtung an der Abladestelle generierten Messwerte für den Austausch untereinander und/oder die Bestimmung der Mengendifferenz an ein cloudbasiertes Rechnernetzwerk übertragen werden. Darüber hinaus kann auf diesem Weg zusätzlich die Abfahrt des beladenen Transportfahrzeugs bzw. Transportwagens übermittelt werden, um somit die korrekte Zuordnung der Messwerte zu gewährleisten. Beispielsweise können die als Fahrzeugwaage ausgeführte Messeinrichtung an der Abladestelle und die Messeinrichtung an der Erntemaschine mit einer sogenannten Cloud verbunden sein und ihre Messwerte an diese zum Vergleich der Werte übertragen. Anschließend kann als Ergebnis dieses Vergleichs ein angepasster Wert für die Füllhöhenwert an die Erntemaschine übermittelt werden. Alternativ kann der angepasste Wert für die Füllhöhenwert von einer Steuerungseinheit der Erntemaschine berechnet werden, wobei lediglich der von der Fahrzeugwaage bestimmte Messwert per Cloud an die Erntemaschine übermittelt wird. Im einfachsten Fall kann der Fahrer des Transportfahrzeugs bzw. des den Transportwagen ziehenden Traktors den von der Fahrzeugwaage bestimmten Messewert unmittelbar durch ein geeignetes Kommunikationsmittel, beispielsweise über Funk o.ä., dem Fahrer der Erntemaschine mitteilen, damit dieser die Vorgabe der Füllhöhe für das Überladesystem entsprechend anpasst.

Die eingangs gestellte Aufgabe wird weiterhin durch ein landwirtschaftliches System gemäß dem Anspruch 15 gelöst.

Gemäß dem Anspruch 15 wird ein landwirtschaftliches System zur Durchführung des Verfahrens nach einem der vorangehenden Ansprüche vorgeschlagen, umfassend zumindest ein landwirtschaftliches Transportfahrzeug oder einen gezogenen Transportwagen mit einem Behältnis sowie zumindest eine selbstfahrende Erntemaschine zum Bearbeiten eines Feldes, wobei das Behältnis zur Aufnahme von Erntegut, das die zumindest eine Erntemaschine von dem Feld aufgenommen hat, eingerichtet ist, wobei das Erntegut mittels eines Überladesystems der Erntemaschine bis zum Erreichen einer vorgegebenen Füllhöhe in das Behältnis überladen und von dem Transportfahrzeug oder dem Transportwagen zu einer entfernten Abladestelle transportiert wird, wobei die Erntemaschine eine Messeinrichtung umfasst, welche die von der Erntemaschine in das Behältnis überladene Erntegutmenge bestimmt und an eine Steuerungseinheit übermittelt, wobei an der Abladestelle eine weitere Messeinrichtung angeordnet ist, welche zur Bestimmung einer von dem Transportfahrzeug oder dem Transportwagen an der Abladestelle übergebenen Erntegutmenge eingerichtet ist und die bestimmte Erntegutmenge an die Steuerungseinheit zur Bestimmung einer Mengendifferenz zwischen der aufgenommenen Erntegutmenge und der übergebenen Erntegutmenge übermittelt, und dass die Steuerungseinheit in Abhängigkeit von der bestimmten Mengendifferenz zumindest ein Steuersignal zur Anpassung der von dem Überladesystem realisierten Füllhöhe generiert. Auf die Vorteile des erfindungsgemäßen Verfahrens darf verwiesen werden.

Die vorliegende Erfindung wird nachstehend anhand eines in den Zeichnungen dargestellten Ausführungsbeispieles näher erläutert.

Es zeigen:
- Fig. 1: eine als Feldhäcksler ausgeführte selbstfahrende Erntemaschine
- Fig. 2: die Erntemaschine gemäß Fig. 1 mit einem zu beladenden Transportfahrzeug;
- Fig. 3: eine als Mähdrescher ausgeführte selbstfahrende Erntemaschine mit einem zu beladenden Transportwagen;
- Fig. 4: exemplarisch eine schematische Darstellung einer von dem beladenen Transportfahrzeug zurückzulegenden Fahrstrecke zwischen einem abzuerntenden Feld und einer Abladestelle; und
- Fig. 5: ein vereinfachtes Ablaufdiagramm.

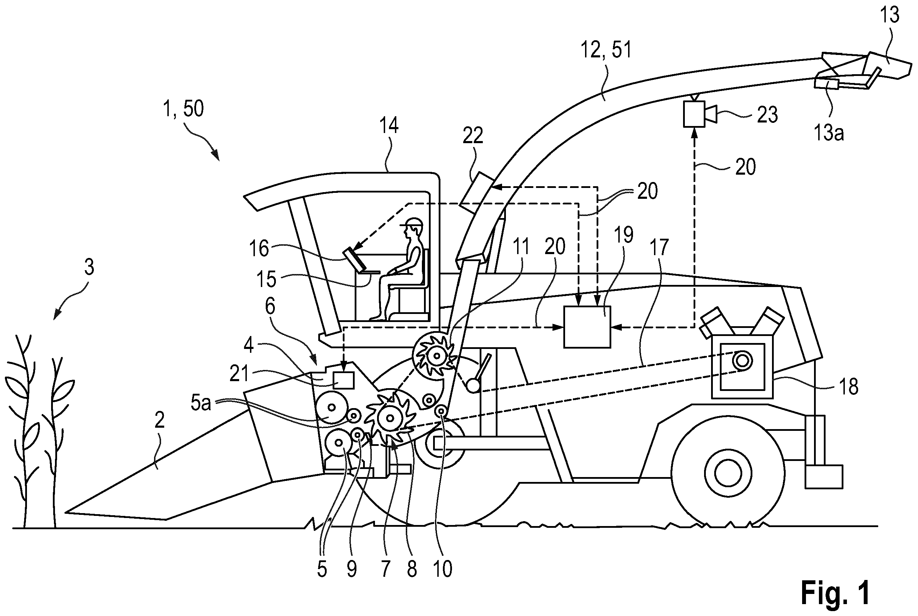

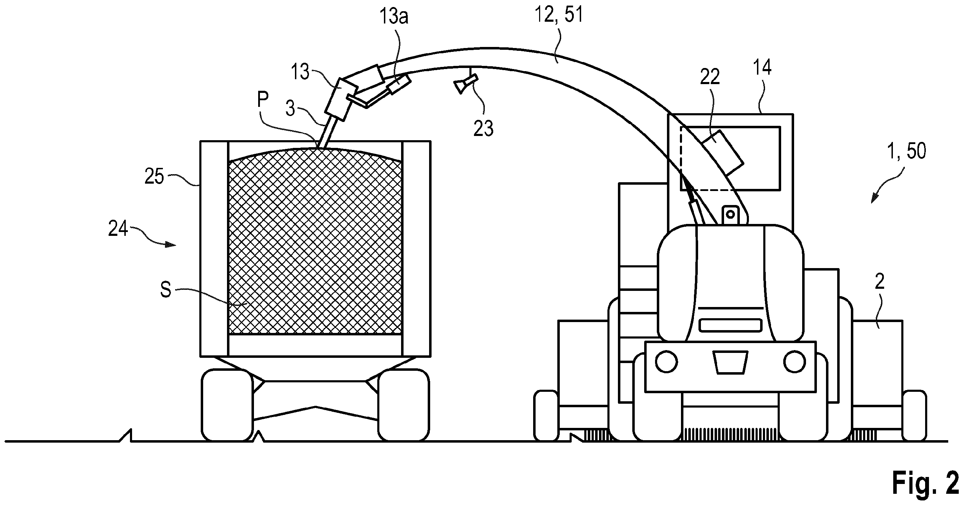

Die Darstellung in Fig. 1 zeigt eine als selbstfahrender Feldhäcksler 1 ausgeführte Erntemaschine 50 in Seitenansicht und Schnittdarstellung. Frontseitig in Fahrtrichtung FR gesehen ist dem Feldhäcksler 1 ein Vorsatzgerät 2 zugeordnet, welches im Erntebetrieb des Feldhäckslers 1 das Erntegut 3 aufnimmt und einer nachfolgenden Einzugsvorrichtung 6 zuführt, die in einem Einzugsgehäuse 4 angeordnete untere und obere Einzugs- und Vorpresswalzen 5, 5a aufweist. Die unteren und oberen Einzugs- und Vorpresswalzen 5, 5a leiten das Erntegut 3 einer der Einzugsvorrichtung 6 nachgeordneten, rotierenden Häckseltrommel 7 zu, deren umlaufende Häckselmesser 8 das Erntegut 3 an einer Gegenschneide 9 zerkleinern. Das zerkleinerte Erntegut 3 wird sodann an eine Nachzerkleinerungseinrichtung 10 übergeben. Ein Nachbeschleuniger 11 beschleunigt das zerkleinerte Erntegut 3 und fördert es durch ein als horizontal und vertikal verstellbaren Auswurfkrümmer 12 ausgeführtes Überladesystem 51 auf ein den Feldhäcksler 1 begleitendes Transportfahrzeug 24, wie in Fig. 2 beispielhaft dargestellt. Eine endseitig an dem Auswurfkrümmer 12 verschwenkbar angeordnete Auswurfkrümmerklappe 13 dient zur Regelung der Wurfweite des Erntegutstrahls. Die Betätigung der Auswurfkrümmerklappe 13 erfolgt durch eine Aktorik 13a, welche vorzugsweise hydraulisch oder elektromechanisch arbeitet. Die Bedienung des Feldhäckslers 1 erfolgt von der Fahrerkabine 14 aus, in welcher Bedienelemente 15 und eine Eingabe-Ausgabeeinheit 16 vorhanden sind. Der Antrieb der beschriebenen Arbeitsorgane erfolgt unter anderem mittels eines Antriebsriemens 17, welcher mit einem Antriebsmotor 18 verbunden ist.

Der Feldhäcksler 1 umfasst weiterhin eine Steuerungseinheit 19, die durch ein drahtloses oder drahtgebundenes Kommunikationsmittel 20 mit der Eingabe-Ausgabeeinheit 16 verbunden ist. Der Einzugsvorrichtung 6 ist eine Messeinrichtung 21 zugeordnet, welche zur Bestimmung der aufgenommenen Erntegutmenge respektive des Erntegutdurchsatzes eingerichtet ist. Zur Ermittlung des Erntegutdurchsatzes wird in dem Feldhäcksler 1 an wenigstens einer Stelle in der Einzugsvorrichtung 6 die Durchlaufgeschwindigkeit des Ernteguts durch die Messeinrichtung 21 ermittelt. Hierzu wird die Drehzahl einer unteren Einzugswalze 5 gemessen. Die Drehzahl der unteren Einzugswalze 5 wird in der Steuerungseinheit 19 mit einer mittels der Messeinrichtung 21 bestimmten Auslenkung der oberen Einzugswalze 5a und in Verbindung mit der bekannten Zuführbreite der Einzugsvorrichtung 6 zu dem Erntegutdurchsatz verrechnet. Die Messeinrichtung 21 ist durch das Kommunikationsmittel 20 mit der Steuerungseinheit 19 verbunden.

An dem Auswurfkrümmer 12 ist eine Sensoreinrichtung 22 angeordnet, welche der Detektion von Ernteguteigenschaften dient. Bevorzugt ist die Sensoreinrichtung 22 als NIR-Sensor ausgeführt. Durch die Sensoreinrichtung 22 wird zumindest die Feuchtigkeit als eine Ernteguteigenschaft des Erntegutes 3 bestimmt und durch das Kommunikationsmittel 20 an die Steuerungseinheit 19 übermittelt.

An der Unterseite des Auswurfkrümmers 12 ist eine weitere Sensoreinrichtung 23 angeordnet, die als eine optische Sensoreinrichtung ausgeführt ist. Die Sensoreinrichtung 23 dient der Überwachung des Überladevorganges des Erntegutes 3 auf das begleitende Transportfahrtzeug 24. Zudem kann mittels der Sensoreinrichtung 23 die Art und Ausführung des Transportfahrtzeugs 24 bestimmt werden. Art und Ausführung des Transportfahrtzeugs 24 betreffen insbesondere die überladbare Erntegutmenge, welche in einem Behältnis 25 des Transportfahrtzeugs 24 aufgenommen werden kann. Die Auswertung von Daten der Sensoreinrichtung 23 durch die Steuerungseinheit 19 ermöglicht es, zwischen verschiedenen Transportfahrtzeugen 24 zu unterscheiden.

In Fig. 2 ist schematisch ein Überladevorgang beispielhaft dargestellt. Der Feldhäcksler 1 wirft durch den Auswurfkrümmer 12 das zuvor bearbeitete Erntegut 3 in Form eines gerichteten Erntegutstrahls in das Behältnis 25 des Transportfahrtzeugs 24, welches beispielsweise als ein Lastkraftwagen ausgeführt sein kann. Wie der schematischen Schnittdarstellung des Behältnisses 25 zu entnehmen ist, wird das Transportfahrtzeug 24 durch die Anhäufung des in Form von Schüttgut S überladenen Erntegutes 3 in dem Behältnis 25 kontinuierlich beladen. Das ausgeworfene Erntegut 3 trifft im Auftreffpunkt P in dem Behältnis 25 auf, wodurch die Menge des zum Schüttkegel S aufgehäuften Ernteguts 3 wächst. Die an dem Auswurfkrümmer 12 angeordnete, hier und bevorzugt als Kamera ausgeführte, Sensoreinrichtung 23 erfasst optisch den Auftreffpunkt des Ernteguts 3 sowie die Abmessungen und die aktuelle Befüllung des Behältnisses 25 und leitet aus den Informationen durch Bildauswertung den Befüllzustand des Behältnisses 25 ab. Anhand der durch die Steuerungseinrichtung 19 ausgeführten Bildauswertung lässt sich eine maximale Füllhöhe bestimmen, um die Ladekapazität des Behältnisses 25 im Wesentlichen vollständig ausschöpfen zu können. Das Beladen von Transportfahrzeugen 24 durch das Überladesystems 51 kann mittels unterschiedlicher Beladestrategien erfolgen, die in der Steuerungseinheit 19 abrufbar hinterlegt sind.

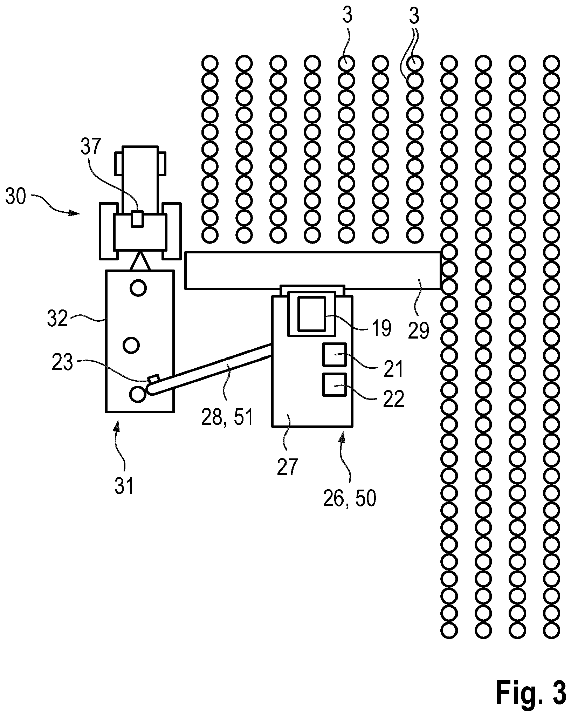

Fig. 3 zeigt beispielhaft einen Überladevorgang von Erntegut 3 von einer als selbstfahrender Mähdrescher 26 ausgeführten Erntemaschine 50 in ein Behältnis 32 eines von einem landwirtschaftlichen Arbeitsfahrzeug 30 gezogenen Transportwagens 31. Der lediglich schematisch dargestellte Mähdrescher 26 weist ein als Korntank 27 ausgeführtes Speicherbehältnis auf, in welchen von dem Mähdrescher 26 mittels eines Vorsatzgerätes 29 aufgenommenes und von Arbeitsaggregaten des Mähdreschers 26 in bekannter Weise bearbeitetes Erntegut 3 temporär zwischengespeichert wird.

Mit dem Erreichen eines definierten Füllstands in dem Korntank 27 wird das Arbeitsfahrzeug 30 mit dem daran angeordneten Transportwagen 31 oder ein Transportfahrzeug 24 geordert, um den Überladevorgang durchzuführen. Für das Durchführen des Überladevorgangs weist der Mähdrescher 26 ein Überladesystem 51 auf, welches ein Auslaufrohr 28 umfasst. Dem Auslaufrohr 28 wird durch in dem Korntank 27 angeordnete Schneckenförderer das Erntegut 3 zugeführt. Endseitig am Auslaufrohr 28 ist eine optische Sensoreinrichtung 23 angeordnet, welche der Identifikation des Transportwagens 31 sowie dessen Position relativ zum Mähdrescher 26 dient. Weiterhin erfasst die Sensoreinrichtung 23 die Dimension des Behältnisses 32 und überwacht den Befüllzustand. Der Mähdrescher 26 umfasst ebenfalls zumindest eine Sensoreinrichtung 22, welche der Detektion von Ernteguteigenschaften dient. Insbesondere wird die Feuchtigkeit des Erntegutes 3 im Korntank 27 durch die zumindest eine Sensoreinrichtung 22 bestimmt.

Von dem Mähdrescher 26 aufgenommenes Erntegut 3 wird nach einem Dresch-, Abscheidungs- und Reinigungsvorgang mittels einer Fördervorrichtung, einem sogenannten Kornelevator, dem Korntank 27 zugeführt. Zur Erfassung der Erntegutmenge ist der Fördervorrichtung zumindest eine Messeinrichtung 21 zugeordnet. Das Messprinzip der zumindest eine Messeinrichtung 21 kann dabei beispielsweise auf einer optischen Erfassung des Erntegutes 3 basieren und/oder auf der Bestimmung einer Gewichtskraft. Die Messeinrichtung 21 überträgt hierfür Signale zur Auswertung und Bestimmung der in den Korntank 27 bis zum Beginn des Überladevorgangs aufgenommenen Erntegutmenge an die Steuerungseinheit 19. Die Menge des während des Überladevorgangs von dem Mähdrescher 26 in das Behältnis 32 überladenen Erntegutes 3 ist somit bekannt.

Sowohl dem Beispiel des Transportfahrzeugs 24, das beispielhaft durch den Feldhäcksler 1 beladen wird, als auch dem Beispiel des gezogenen Transportwagens 31, welcher beispielhaft von einem Mähdrescher 26 beladen wird, ist gemeinsam, dass für eine aus Sicht der Transportlogistik optimierte Beladung eine Füllhöhe vorgegeben wird, die eine maximale Beladung der Behältnisse 25 bzw. 32 gewährleistet. Die vorgegebene Füllhöhe orientiert sich dabei an der Dimension des spezifischen Behältnisses 25 bzw. 32.

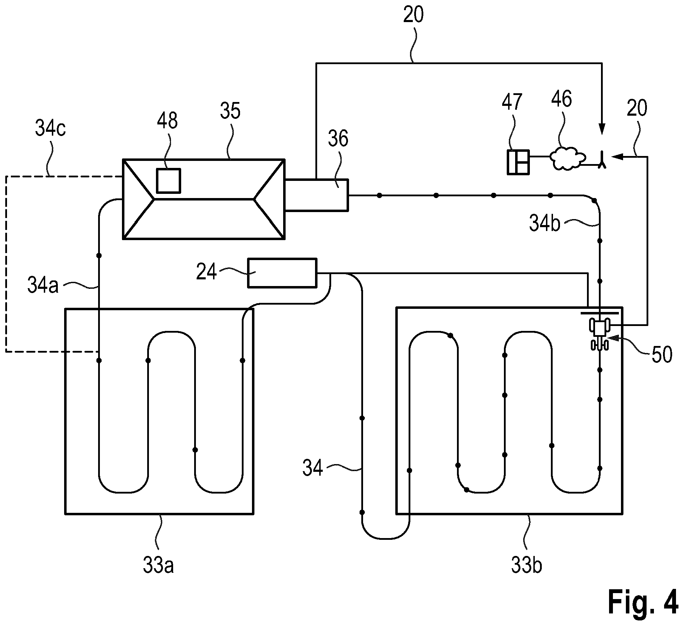

In Fig. 4 ist exemplarisch und schematisch ein Transportvorgang des Transportfahrzeugs 24 bzw. des von dem Arbeitsfahrzeug 30 gezogenen Transportwagens 31 veranschaulicht.

Die Erntemaschine 50 bearbeitet beispielhaft zumindest eines von zwei räumlich voneinander beabstandeten Felder 33a, 33b, die untereinander durch eine Wegstrecke 34 miteinander verbunden sind. Das Transportfahrzeug 24 nimmt auf einem Feld 33a, 33b von der Erntemaschine 50 abgeerntetes Erntegut in seinem Behältnis 25 auf und bringt dieses zum Entladen zu einer Abladestelle 35. Bei der Abladestelle 35 kann es sich beispielsweise um ein Silo auf einer Hofstätte oder eine Getreidemühle handeln. Mit 34a, 34b sind weitere Streckenabschnitte bezeichnet, welche die Abladestelle 35 mit den Feldern 33a, 33b transporttechnisch verbinden. Bei den Streckenabschnitten 34a, 34b kann es sich beispielsweise um befestigte Straßen als auch Feldwege und dergleichen mehr handeln, die von dem Transportfahrzeug 24 befahrbar sind.

An der Abladestelle 35 befindet sich eine Messeinrichtung 36, welche beispielsweise als Fahrzeugwaage ausgeführt sein kann. Mittels der Messeinrichtung 36 wird die Erntegutmenge im Behältnis 25 bestimmt, welche die Abladestelle 35 vor dem Entladen erreicht.

Zwischen dem Beladen des Transportfahrzeugs 24 auf dem Feld 33a, 33b und dem Entladen an der Abladestelle 35 kann es zu Erntegutverlusten kommen, die auf verschiedene Einflussfaktoren zurückgeführt werden können. Das Befüllen des Behältnisses 25 des Transportfahrzeugs 24 mit einer vorgegebenen Füllhöhe, die eine maximale Befüllung ermöglicht, kann bei unebenen Verhältnissen der Wegstrecken 34, 34a, 34b zu Erntegutverlusten führen. Diese Erntegutverluste sind unter anderem auf Erschütterungen zurückzuführen, die dazu führen, dass Erntegut seitlich über die Bordwand rieselt, da sich die Form des Schüttkegels in dem Behältnis 25 ändert. Der Schüttkegel S wird beispielsweise flacher und breiter. Beim Fahren entlang einer der Wegstrecken 34, 34a, 34b, 34c enden die Flanken des sich einstellenden Schüttkegels S immer unterhalb der Bordwand, wobei dieser Abstand umso kleiner sein kann je feuchter das Erntegut 3 ist, da die Rieseleigenschaft mit zunehmender Feuchte sinkt.

Weitere Aspekte beim Transport des Erntegutes 3 vom Feld 33a, 33b zur Abladestelle 35, welche Einfluss auf das Auftreten von Erntegutverlusten haben, können sich aus einem individuellen Fahrverhalten eines Fahrers und/oder gegebenenfalls abweichend von einer üblicherweise befahrenen Wegstrecken 34a befahrenen Wegstrecken 34c und/oder sich ändernden Fahrstreckenkonditionen ergeben. Statt einer befestigten Straße werden Schotterpisten oder Feldwege befahren, weil diese eine kürzere Wegstrecke zur Abladestelle 35 darstellen.

Somit können auftretende Erntegutverluste den transportlogistischen Vorteil, der aus der Befüllung des Behältnisses 25, 32 bis zur maximalen Füllhöhe als Vorgabe durch das Überladesystem 51 der jeweiligen Erntemaschine 50 resultiert, zumindest kompensieren. Der Einfluss der transportbedingten Erntegutverluste wird umso größer, je häufiger ein Transportfahrzeug 24 bzw. ein gezogener Transportwagen 31 zwischen einem Feld 33a, 33b und der Abladestelle 35 hin- und herpendelt.

Um die auftretenden transportbedingten Erntegutverluste zu bestimmen, wird ein Verfahren zum Einstellen einer Füllhöhe in einem Behältnis 25, 32 zumindest eines landwirtschaftlichen Transportfahrzeugs 24 oder gezogenen Transportwagens 31 vorgeschlagen, in welches von zumindest einer selbstfahrenden Erntemaschine 50 aufgenommenes Erntegut 3 mittels des Überladesystems 51 bis zum Erreichen einer vorgegebenen Füllhöhe überladen und von dem Transportfahrzeug 24 oder dem gezogenen Transportwagen 31 zu der entfernten Abladestelle 36 transportiert wird. Dabei wird eine von der Erntemaschine 50 in das Behältnis 25, 32 überladene Erntegutmenge durch die zumindest eine an der Erntemaschine angeordnete Messeinrichtung 21 bestimmt und an die Steuerungseinheit 19 übermittelt.

Die von dem Transportfahrzeug 24 oder dem Transportwagen 31 an der Abladestelle 35 übergebene Erntegutmenge durch die dortige Messeinrichtung 36 bestimmt und an die Steuerungseinheit 19 zur Bestimmung einer Mengendifferenz zwischen der auf dem Feld 33a, 33b aufgenommenen Erntegutmenge und der übergebenen Erntegutmenge übermittelt. In Abhängigkeit von der bestimmten Mengendifferenz wird zumindest ein Steuersignal generiert, durch welches die von dem Überladesystem 51 realisierte Füllhöhe angepasst wird.

Beispielhaft wird bei der als Mähdrescher 26 ausgeführten Erntemaschinen 50 zur Bestimmung der Überlademenge vor dem Überladevorgang die auf dem Feld 33b in dem Korntank 27 temporär aufgenommene Erntegutmenge durch die Messeinrichtung 21 bestimmt. Dieser Wert für die aufgenommene Erntegutmenge wird an die Steuerungseinheit 19 unmittelbar vor dem erneuten Überladen übertragen.

Während des Transportes des Erntegutes vom Überladepunkt auf dem Feld 33b zur Abladestelle 35 können das Fahrverhalten des Transportfahrzeugs 24 oder des gezogenen Transportwagens 31 beeinflussende Parameter sensorisch erfasst und protokolliert werden. Hierzu kann beispielsweise eine Kamera 37 an dem landwirtschaftlichen Arbeitsfahrzeug 30 angeordnet sein, welche die Beschaffenheit der abgefahrenen Wegstrecke 34, 34a, 34, 34c erfasst. Die Beschaffenheit der Wegstrecke 34a, 34b, 34c umfasst dabei insbesondere die Beschaffenheit der befahrenen Oberflächen der Wegstrecken 34, 34a, 34b, 34c.

Üblicherweise weisen das Transportfahrzeug 24 sowie das Arbeitsfahrzeug 30 eine Positionsortungsvorrichtung auf, welche es ermöglicht, die gefahrene Wegstrecke 34, 34a, 34b, 34c zu erfassen sowie den erfassten Positionsortungsdaten Fahrgeschwindigkeiten zuzuordnen, die gemeinsam abgespeichert werden. Dadurch kann auch auf das Fahrverhalten des Fahrers geschlossen werden. So kann beispielsweise ein starkes Verzögern vor einer Kurve oder eine unangepasste Kurvenfahrgeschwindigkeit zu erhöhten Erntegutverlusten während der Transportfahrt führen.

In Fig. 4 ist eine Ausführungsform dargestellt, bei der eine Recheneinheit 47 dezentral angeordnet sein kann. Die von der Messeinrichtung 21 der Erntemaschine 50 und der weiteren Messeinrichtung 36 an der Abladestelle 35 generierten Messwerte können für den Austausch untereinander und/oder die Bestimmung der Mengendifferenz an ein cloudbasiertes Rechnernetzwerk 46 übertragen werden, welches die Recheneinheit 47 umfasst. Von der Recheneinheit 47 wird das Ergebnis der Bestimmung der Mengendifferenz an die Steuerungseinheit 19 der Erntemaschine 50 übertragen, um in Abhängigkeit davon die Vorgabe der Füllhöhe für das Überladesystem 51 der Erntemaschine 50 anzupassen.

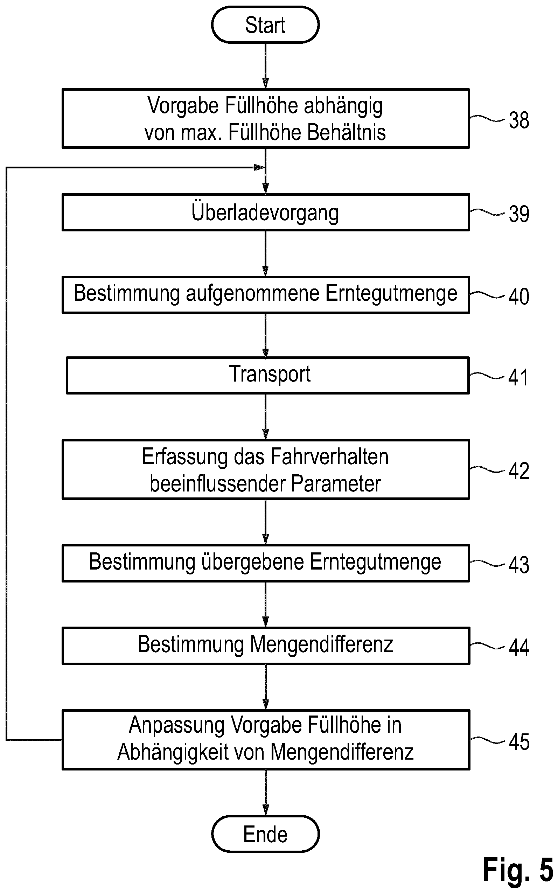

In Fig. 5 ist beispielhaft ein vereinfachtes Ablaufdiagramm dargestellt, welches das erfindungsgemäß Verfahren erläutern soll.

In einem ersten Schritt 38 wird vor einem erstmaligen Überladevorgang dem Überladesystem 51 durch die Steuerungseinheit 19 eine Füllhöhe vorgegeben, die der maximalen Füllhöhe des Behältnisses 25, 32 entspricht. Hierzu werden Art und Fassungsvermögen des Transportfahrzeugs 24 bzw. des Transportwagens 31 bestimmt, hier und vorzugsweise mittels der als Kamera ausgeführten Sensoreinrichtung 23, die Bestandteil des Überladesystems 51 ist. Alternative Arten der Bestimmung der Art und des Fassungsvermögens des Transportfahrzeugs 24 bzw. des Transportwagens 31 sind denkbar, beispielsweise durch das Auslesen von an dem Transportfahrzeug 24 bzw. dem Transportwagen 31 angeordneten RFID-Chips.

Im nachfolgenden Schritt 39 erfolgt das Überladen von der Erntemaschine 50 in das Behältnis 25, 32.

Im Schritt 40 wird die im Behältnis 25, 32 aufgenommene Erntegutmenge bestimmt. Die Bestimmung der Menge des aufgenommenen Erntegutes ist bereits weiter oben anhand der Fig. 1 bis 3 für verschiedene Erntemaschinen 50 beschrieben. Eine alternative Ausgestaltung sieht vor, dass die Steuerungseinheit 19 dazu eingerichtet sein kann, die von dem Behältnis 25, 32 aufgenommene Überlademenge unmittelbar nach dem Abschluss des Überladevorganges durch eine an dem Transportfahrzeug 24 oder dem Transportwagen 31 angeordnete Messeinrichtung zu bestimmen. Somit erfolgt die Bestimmung der aufgenommenen Erntegutmenge beim Mähdrescher 26 unmittelbar vor dem Überladen, während die Bestimmung der aufgenommenen Erntegutmenge beim Feldhäcksler 1 während des Überladens erfolgt. Wird die aufgenommene Erntegutmenge am Transportfahrzeug 24 bzw. Transportwagen 31 durchgeführt, erfolgt die Bestimmung nach Abschluss des Überladevorgangs auf dem Feld 33a, 33b.

Im Schritt 41 erfolgt der Transport des aufgenommenen Erntegutes 3 zur Abladestelle 35. Während des Transportes des Erntegutes vom Überladepunkt auf einem Feld 33a, 33b zur Abladestelle 35 werden das Fahrverhalten des Transportfahrzeugs 24 oder des gezogenen Transportwagens 31 beeinflussende Parameter sensorisch erfasst und protokolliert.

So wird als ein das Fahrverhalten beeinflussender Parameter die Fahrgeschwindigkeit und/oder die Beschaffenheit der jeweils befahrenen Wegstrecke 34, 34a, 34b, 34c zwischen dem Feld 33a, 33b und der Ablagestelle 35 erfasst. Der oder die das Fahrverhalten beeinflussenden Parameter werden dabei bei der Anpassung der Füllhöhe berücksichtigt.

Im Schritt 43 wird die Bestimmung der an der Abladestelle 35 übergebenen Erntegutmenge mittels einer optischen Sensoranordnung und/oder einer Sensoranordnung zur Bestimmung der Gewichtskraft als weitere Messeinrichtung 36 durchgeführt. So kann bei Erreichen der Abladestelle 35 die übergebene bzw. zu übergebende Erntegutmenge, vorzugsweise durch Wiegen mittels der als Fahrzeugwaage ausgeführten Messeinrichtung 36, bestimmt werden. Alternative Wägemethoden sind denkbar, bei denen lediglich das Gewicht des abgeladenen Erntegutes bestimmt wird.

Der Wert der an der Abladestelle 35 bestimmten Erntegutmenge wird an die Steuerungseinheit 19 übertragen. Dabei wird dem Wert der bestimmten Erntegutmenge das Transportfahrzeug 24 bzw. der Transportwagen 31 als Information zugeordnet, welches bzw. welcher das Erntegut übergeben hat.

Im Schritt 44 wird die jeweilige Mengendifferenz zwischen der aufgenommenen Erntegutmenge und der übergebenen Erntegutmenge durch die Steuerungseinheit 19 bestimmt.

In Abhängigkeit von der bestimmten Mengendifferenz für das jeweilige Transportfahrzeug 24 bzw. den jeweiligen Transportwagen 31 wird die im Schritt 38 voreingestellte Vorgabe der Füllhöhe angepasst. Insbesondere wird mit zunehmender Mengendifferenz die vorgegebene Füllhöhe reduziert, bis zu der das jeweilige Transportfahrzeug 24 bzw. der jeweilige Transportwagen 31 befüllt werden.

Der Vorgang endet mit dem Abschluss des Ernteprozesses auf dem jeweiligen Feld 33a, 33b.

Gemäß dem Verfahren kann bei einem gleichzeitigen Einsatz mehrerer Transportfahrzeuge 24 und/oder Transportwagen 31 für den Abtransport in einer ersten zeitlich begrenzten Phase die jeweilig bestimmten Mengendifferenzen der Transportfahrzeuge 24 bzw. Transportwagen 31 gemittelt und zur Anpassung der Füllhöhe für alle Transportfahrzeuge 24 bzw. Transportwagen 31 verwendet werden.

Bevorzugt kann bei einem Einsatz mehrerer Transportfahrzeuge 24 und/oder Transportwagen 31 eine Spezifikation eines jeden Transportfahrzeugs 24 bzw. jedes Transportwagens 31 von der Sensoreinrichtung 23 der Erntemaschine 50 sowie der weiteren Messeinrichtung 36 oder einer zusätzlichen optischen oder elektromagnetischen Sensoranordnung 48 an der Abladestelle 35 individuell bestimmt wird, so dass die Anpassung der Füllhöhe individuell für jedes Transportfahrzeug 24 bzw. jeden Transportwagen 31 durchgeführt wird.

### Bezugszeichenliste

| | | | |
|---|---|---|---|
| 1 | Feldhäcksler | 31 | Transportwagen |
| 2 | Vorsatzgerät | 32 | Behältnis von 32 |
| 3 | Erntegut | 33a | Feld |
| 4 | Einzugsgehäuse | 33b | Feld |
| 5 | Untere Einzugs- und Vorpresswalzen | 34 | Wegstrecke |
| 5a | Obere Einzugs- und Vorpresswalzen | 34a | Wegstrecke |
| 6 | Einzugsvorrichtung | 34b | Wegstrecke |
| 7 | Häckseltrommel | 34c | Wegstrecke |
| 8 | Häckselmesser | 35 | Abladestelle |
| 9 | Gegenmesser | 36 | Messeinrichtung |
| 10 | Nachzerkleinerungseinrichtung | 37 | Kamera |
| 11 | Nachbeschleuniger | 38 | Schritt |
| 12 | Auswurfkrümmer | 39 | Schritt |
| 13 | Auswurfkrümmerklappe | 40 | Schritt |
| 14 | Kabine | 41 | Schritt |
| 15 | Bedienelement | 42 | Schritt |
| 16 | Eingabe-Ausgabeeinheit | 43 | Schritt |
| 17 | Antriebsriemen | 44 | Schritt |
| 18 | Antriebsmotor | 45 | Schritt |
| 19 | Steuerungseinheit | 46 | Rechnernetzwerk |
| 20 | Kommunikationsmittel | 47 | Recheneinheit |
| 21 | Messeinrichtung | 48 | Sensoranordnung |
| 22 | Sensoreinrichtung | 50 | Erntemaschine |
| 23 | Sensoreinrichtung | 51 | Überladesystem |
| 24 | Transportfahrzeug | | |
| 25 | Behältnis von 24 | | |
| 26 | Mähdrescher | | |
| 27 | Speicherbehältnis/Korntank | | |
| 28 | Auslaufrohr | | |
| 29 | Vorsatzgerät | | |
| 30 | Arbeitsfahrzeug | | |

## Patentansprüche

1. Verfahren zum Einstellen einer Füllhöhe in einem Behältnis (25, 32) zumindest eines landwirtschaftlichen Transportfahrzeugs (24) oder gezogenen Transportwagens (31), in welches von zumindest einer selbstfahrenden Erntemaschine (50) aufgenommenes Erntegut (3) mittels eines Überladesystems (51) bis zum Erreichen einer vorgegebenen Füllhöhe überladen und von dem Transportfahrzeug (24) oder dem Transportwagen (31) zu einer entfernten Abladestelle (35) transportiert wird, wobei eine von der Erntemaschine (50) in das Behältnis (25, 32) überladene Erntegutmenge durch zumindest eine an der Erntemaschine (50) angeordnete Messeinrichtung (21) bestimmt und an eine Steuerungseinheit (19) übermittelt wird, **dadurch gekennzeichnet, dass** eine von dem Transportfahrzeug (24) oder dem Transportwagen (31) an der Abladestelle (35) übergebene Erntegutmenge durch eine weitere Messeinrichtung (36) bestimmt und an die Steuerungseinheit (19) zur Bestimmung einer Mengendifferenz zwischen der aufgenommenen Erntegutmenge und der übergebenen Erntegutmenge übermittelt wird und dass in Abhängigkeit von der bestimmten Mengendifferenz zumindest ein Steuersignal generiert wird, durch welches die von dem Überladesystem (51) realisierte Füllhöhe angepasst wird.

2. Verfahren nach Anspruch 1, **dadurch gekennzeichnet, dass** zur Bestimmung der Überlademenge ein Durchsatz der von der Erntemaschine (50) aufgenommenen Erntegutmenge durch die Messeinrichtung (21) bestimmt wird.

3. Verfahren nach Anspruch 1 oder 2, **dadurch gekennzeichnet, dass** zur Bestimmung der Überlademenge eine in einem Speicherbehältnis (27) der Erntemaschine (50) temporär aufgenommene Erntegutmenge durch die Messeinrichtung (21) bestimmt wird.

4. Verfahren nach einem der Ansprüche 1 bis 3, **dadurch gekennzeichnet, dass** die von dem Behältnis (25, 32) aufgenommene Überlademenge unmittelbar nach dem Abschluss des Überladevorganges durch eine an dem Transportfahrzeug (24) oder dem Transportwagen (31) angeordnete Messeinrichtung bestimmt wird.

5. Verfahren nach einem der Ansprüche 1 bis 4, **dadurch gekennzeichnet, dass** die Bestimmung der an der Abladestelle (35) übergebenen Erntegutmenge mittels einer optischen Sensoranordnung und/oder einer Sensoranordnung zur Bestimmung der Gewichtskraft als weitere Messeinrichtung (36) durchgeführt wird.

6. Verfahren nach einem der vorangehenden Ansprüche, **dadurch gekennzeichnet, dass** während des Transportes des Erntegutes vom Überladepunkt auf einem Feld (33a, 33b) zur Abladestelle (35) das Fahrverhalten des Transportfahrzeugs (24) oder des gezogenen Transportwagens (31) beeinflussende Parameter sensorisch erfasst und protokolliert werden.

7. Verfahren nach Anspruch 6, **dadurch gekennzeichnet, dass** als ein das Fahrverhalten beeinflussender Parameter die Fahrgeschwindigkeit und/oder die Beschaffenheit einer befahrenen Wegstrecke (34, 34a, 34b, 34c) zwischen Feld (33a, 33b) und Ablagestelle (35) erfasst wird.

8. Verfahren nach Anspruch 6 oder 7, **dadurch gekennzeichnet, dass** die das Fahrverhalten beeinflussenden Parameter bei der Anpassung der Füllhöhe berücksichtigt werden.

9. Verfahren nach einem der vorangehenden Ansprüche, **dadurch gekennzeichnet, dass** die Erntemaschine (50) eine Sensoreinrichtung (22) umfasst, mittels der zumindest eine Ernteguteigenschaft des zu überladenden Erntegutes (3) bestimmt wird, die Einfluss auf einen sich im Behältnis (25, 32) ausbildenden Schüttkegel (S) hat.

10. Verfahren nach einem der vorangehenden Ansprüche, **dadurch gekennzeichnet, dass** mit zunehmender Mengendifferenz die vorgegebene Füllhöhe kontinuierlich reduziert wird.

11. Verfahren nach einem der vorangehenden Ansprüche, **dadurch gekennzeichnet, dass** bei einer erstmaligen Befüllung des Behältnisses (25, 32) durch das Überladesystem (51) der Erntemaschine (50) eine maximale Füllhöhe des Behältnisses (25, 32) bestimmt und als vorgegebene Füllhöhe eingestellt wird und dass diese vorgegebene Füllhöhe nach jedem erfolgten Abladevorgang entsprechend der detektierten Mengendifferenz prozentual zu der maximalen Füllhöhe des Behältnisses (25, 32) angepasst wird.

12. Verfahren nach einem der vorangehenden Ansprüche, **dadurch gekennzeichnet, dass** bei einem Einsatz mehrerer Transportfahrzeuge (24) und/oder Transportwagen (31) für den Abtransport in einer ersten zeitlich begrenzten Phase die jeweilig bestimmten Mengendifferenzen der Transportfahrzeuge (24) bzw. Transportwagen (31) gemittelt und zur Anpassung der Füllhöhe für alle Transportfahrzeuge (24) bzw. Transportwagen (31) verwendet werden.

13. Verfahren nach einem der vorangehenden Ansprüche, **dadurch gekennzeichnet, dass** bei einem Einsatz mehrerer Transportfahrzeuge (24) und/oder Transportwagen (31) eine Spezifikation eines jeden Transportfahrzeugs (24) bzw. jedes Transportwagens (31) durch eine Sensoreinrichtung (23) von der Erntemaschine (50) sowie einer zusätzlichen Sensoranordnung (48) an der Abladestelle (35) individuell bestimmt wird, so dass die Anpassung der Füllhöhe individuell für jedes Transportfahrzeug (24) bzw. jeden Transportwagen (31) durchgeführt wird.

14. Verfahren nach einem der vorangehenden Ansprüche, **dadurch gekennzeichnet, dass** die von der Messeinrichtung (21) der Erntemaschine (50) und der weiteren Messeinrichtung (36) an der Abladestelle (35) generierten Messwerte für den Austausch untereinander und/oder die Bestimmung der Mengendifferenz an ein cloudbasiertes Rechnernetzwerk (46) übertragen werden.

15. Landwirtschaftliches System zur Durchführung des Verfahrens nach einem der vorangehenden Ansprüche, umfassend zumindest ein landwirtschaftliches Transportfahrzeug (24) oder einen gezogenen Transportwagen (31) mit einem Behältnis (25, 32) sowie zumindest eine selbstfahrende Erntemaschine (50) zum Bearbeiten eines Feldes (33a, 33b), wobei das Behältnis (25, 32) zur Aufnahme von Erntegut (3), das die zumindest eine Erntemaschine (50) von dem Feld aufgenommen hat, eingerichtet ist, wobei das Erntegut (3) mittels eines Überladesystems (51) der Erntemaschine (50) bis zum Erreichen einer vorgegebenen Füllhöhe in das Behältnis (25, 32) überladen und von dem Transportfahrzeug (24) oder dem Transportwagen (31) zu einer entfernten Abladestelle (35) transportiert wird, wobei die Erntemaschine (50) eine Messeinrichtung (21) umfasst, welche die von der Erntemaschine (50) in das Behältnis (25, 32) überladene Erntegutmenge bestimmt und an eine Steuerungseinheit (19) übermittelt, **dadurch gekennzeichnet, dass** an der Abladestelle (35) eine weitere Messeinrichtung (36) angeordnet ist, welche zur Bestimmung einer von dem Transportfahrzeug (25) oder dem Transportwagen (31) an der Abladestelle (35) übergebenen Erntegutmenge eingerichtet ist und die bestimmte Erntegutmenge an die Steuerungseinheit (19) zur Bestimmung einer Mengendifferenz zwischen der aufgenommenen Erntegutmenge und der übergebenen Erntegutmenge übermittelt, und dass die Steuerungseinheit (19) in Abhängigkeit von der bestimmten Mengendifferenz zumindest ein Steuersignal zur Anpassung der von dem Überladesystem (51) realisierten Füllhöhe generiert.

## Claims

1. Method for setting a filling height in a container (25, 32) of at least one agricultural transport vehicle (24) or towed transport wagon (31), into which crop (3) picked up by at least one self-propelled harvesting machine (50) is overloaded by means of an overloading system (51) until a predetermined filling height is reached and is transported by the transport vehicle (24) or the transport wagon (31) to a remote unloading point (35), wherein a quantity of crop overloaded by the harvesting machine (50) into the container (25, 32) is determined by at least one measuring device (21) arranged on the harvesting machine (50) and transmitted to a control unit (19), **characterised in that** a quantity of crop material transferred by the transport vehicle (24) or the transport wagon (31) at the unloading point (35) is determined by a further measuring device (36) and transmitted to the control unit (19) to determine a quantity difference between the quantity of crop material received and the quantity of crop material transferred, and **in that** at least one control signal is generated as a function of the determined quantity difference, by means of which the filling level realised by the overloading system (51) is adjusted.

2. Method according to claim 1, **characterised in that** a throughput of the quantity of crop picked up by the harvesting machine (50) is determined by the measuring device (21) in order to determine the overloading quantity.

3. Method according to claim 1 or 2, **characterised in that** to determine the overload quantity, a quantity of crop temporarily stored in a storage container (27) of the harvesting machine (50) is determined by the measuring device (21).

4. Method according to one of claims 1 to 3, **characterised in that** the overloading quantity received by the container (25, 32) is determined immediately after completion of the overloading process by a measuring device arranged on the transport vehicle (24) or the transport wagon (31).

5. Method according to one of claims 1 to 4, **characterised in that** the determination of the quantity of crop material transferred at the unloading point (35) is carried out by means of an optical sensor arrangement and/or a sensor arrangement for determining the weight force as a further measuring device (36).

6. Method according to one of the preceding claims, **characterised in that** parameters influencing the driving behaviour of the transport vehicle (24) or the towed transport wagon (31) are recorded by sensors and logged during the transport of the harvested crop from the transfer point in a field (33a, 33b) to the unloading point (35).

7. Method according to claim 6, **characterised in that** the driving speed and/or the nature of a travelled path (34, 34a, 34b, 34c) between the field (33a, 33b) and the deposit point (35) is recorded as a parameter influencing the driving behaviour.

8. Method according to claim 6 or 7, **characterised in that** the parameters influencing the driving behaviour are taken into account when adjusting the filling level.

9. Method according to one of the preceding claims, **characterised in that** the harvesting machine (50) comprises a sensor device (22), by means of which at least one crop property of the crop (3) to be overloaded is determined, which has an influence on a cone of bulk material (S) forming in the container (25, 32).

10. Method according to one of the preceding claims, **characterised in that** the predetermined filling level is continuously reduced as the difference in quantity increases.

11. Method according to one of the preceding claims, **characterised in that** when the container (25, 32) is filled for the first time by the overloading system (51) of the harvesting machine (50), a maximum filling height of the container (25, 32) is determined and set as a predetermined filling height, and **in that** this predetermined filling height is adjusted as a percentage of the maximum filling height of the container (25, 32) after each unloading operation carried out in accordance with the detected quantity difference.

12. Method according to one of the preceding claims, **characterised in that**, when several transport vehicles (24) and/or transport trolleys (31) are used for the removal in a first time-limited phase, the respectively determined quantity differences of the transport vehicles (24) or transport trolleys (31) are averaged and used to adjust the filling level for all transport vehicles (24) or transport trolleys (31).

13. Method according to one of the preceding claims, **characterised in that**, when several transport vehicles (24) and/or transport carts (31) are used, a specification of each transport vehicle (24) or each transport cart (31) is determined individually by a sensor device (23) of the harvesting machine (50) and an additional sensor arrangement (48) at the unloading point (35), so that the adjustment of the filling height is carried out individually for each transport vehicle (24) or each transport cart (31).

14. Method according to one of the preceding claims, **characterised in that** the measured values generated by the measuring device (21) of the harvesting machine (50) and the further measuring device (36) at the unloading point (35) are transmitted to a cloud-based computer network (46) for exchange with each other and/or determination of the quantity difference.

15. Agricultural system for carrying out the method according to one of the preceding claims, comprising at least one agricultural transport vehicle (24) or a towed transport wagon (31) with a container (25, 32) and at least one self-propelled harvesting machine (50) for working a field (33a, 33b), wherein the container (25, 32) is set up to receive crop material (3) which the at least one harvesting machine (50) has picked up from the field, wherein the crop material (3) is loaded by means of an overloading system (51) of the harvesting machine (50) until a predetermined filling level is reached, which the at least one harvesting machine (50) has picked up from the field, the crop (3) being overloaded into the container (25, 32) by means of an overloading system (51) of the harvesting machine (50) until a predetermined filling height is reached and being transported by the transport vehicle (24) or the transport wagon (31) to a remote unloading point (35), the harvesting machine (50) comprising a measuring device (21) which determines the quantity of crop overloaded by the harvesting machine (50) into the container (25, 32) and transmits it to a control unit (19), **characterised in that** a further measuring device (36) is arranged at the unloading point (35), which is set up to determine a quantity of crop material transferred by the transport vehicle (25) or the transport wagon (31) at the unloading point (35) and transmits the determined quantity of crop material to the control unit (19) to determine a quantity difference between the quantity of crop material picked up and the quantity of crop material transferred, and **in that** the control unit (19) generates at least one control signal for adjusting the filling level realised by the overloading system (51) as a function of the determined quantity difference.

## Revendications

1. Procédé de réglage d'une hauteur de remplissage dans un récipient (25, 32) d'au moins un véhicule de transport agricole (24) ou d'un moyen de transport (31) tracté, dans lequel la récolte (3) ramassée par au moins une récolteuse automotrice (50) est transférée au moyen d'un système de transbordement (51), jusqu'à atteindre une hauteur de remplissage prédéfinie, et est transportée par le véhicule de transport (24) ou le moyen de transport (31) jusqu'à un point de déchargement (35) situé à distance, sachant qu'une quantité de récolte, transférée depuis la récolteuse (50) dans le récipient (25, 32), est déterminée par au moins un dispositif de mesure (21) installé sur la récolteuse (50) et est transmise à une unité de commande (19), **caractérisé en ce qu'**une quantité de récolte transférée du véhicule de transport (24) ou du moyen de transport (31) au point de déchargement (35) est déterminée par un dispositif de mesure (36) supplémentaire et est transmise à l'unité de commande (19) en vue de la détermination d'une différence de quantités entre la quantité de récolte ramassée et la quantité de récolte transférée, et **en ce que**, en fonction de la différence de quantités déterminée, au moins un signal de commande est généré, par lequel la hauteur de remplissage réalisée par le système de transbordement (51) est adaptée.

2. Procédé selon la revendication 1, **caractérisé en ce que** pour la détermination de la quantité transférée, un débit de la quantité de récolte ramassée par la récolteuse (50) est déterminé par le dispositif de mesure (21).

3. Procédé selon la revendication 1 ou 2, **caractérisé en ce que** pour la détermination de la quantité transférée, une quantité de récolte recueillie temporairement dans un réservoir (27) de la récolteuse (50) est déterminée par le dispositif de mesure (21).

4. Procédé selon l'une des revendications 1 à 3, **caractérisé en ce que** directement à la fin de l'opération de transbordement, la quantité transférée, recueillie par le récipient (25, 32), est déterminée par un dispositif de mesure installé sur le véhicule de transport (24) ou le moyen de transport (31).

5. Procédé selon l'une des revendications 1 à 4, **caractérisé en ce que** la détermination de la quantité de récolte transférée au point de déchargement (35) est réalisée à l'aide d'un système de capteur optique et/ou d'un système de capteur destiné à déterminer le poids, en tant que dispositif de mesure (36) supplémentaire.

6. Procédé selon l'une des revendications précédentes, **caractérisé en ce que** pendant le transport de la récolte depuis le point de transbordement dans un champ (33a, 33b) jusqu'au point de déchargement (35), des paramètres influençant le comportement de déplacement du véhicule de transport (24) ou du moyen de transport (31) tracté sont détectés par des capteurs et sont enregistrés.

7. Procédé selon la revendication 6, **caractérisé en ce qu'**en tant que paramètre influençant le comportement de déplacement, on détecte la vitesse de déplacement et/ou la nature d'un trajet (34, 34a, 34b, 34c) parcouru entre le champ (33a, 33b) et le point de dépôt (35).

8. Procédé selon la revendication 6 ou 7, **caractérisé en ce que** les paramètres influençant le comportement de déplacement sont pris en compte lors de l'adaptation de la hauteur de remplissage.

9. Procédé selon l'une des revendications précédentes, **caractérisé en ce que** la récolteuse (50) comprend un dispositif de capteur (22) à l'aide duquel on détermine au moins une propriété de récolte de la récolte (3) à transférer, qui exerce une influence sur un cône de déversement (S) se formant dans le récipient (25, 32).

10. Procédé selon l'une des revendications précédentes, **caractérisé en ce qu'**à mesure que la différence de quantités augmente, la hauteur de remplissage prédéfinie est réduite en continu.

11. Procédé selon l'une des revendications précédentes, **caractérisé en ce que** lors d'un premier remplissage du récipient (25, 32) par le système de transbordement (51) de la récolteuse (50), on détermine une hauteur de remplissage maximale du récipient (25, 32) que l'on règle en tant que hauteur de remplissage prédéfinie, et **en ce que**, après chaque opération de déchargement effectuée, cette hauteur de remplissage prédéfinie est adaptée en pourcentage par rapport à la hauteur de remplissage maximale du récipient (25, 32), en fonction de la différence de quantités détectée.

12. Procédé selon l'une des revendications précédentes, **caractérisé en ce que** lors de l'utilisation de plusieurs véhicules de transport (24) et/ou de moyens de transport (31) pour l'évacuation, on calcule, au cours d'une première phase limitée dans le temps, la moyenne des différences de quantités respectives déterminées des véhicules de transport (24) ou des moyens de transport (31), et on l'utilise pour adapter la hauteur de remplissage pour tous les véhicules de transport (31) ou moyens de transport (31).

13. Procédé selon l'une des revendications précédentes, **caractérisé en ce que** lors de l'utilisation de plusieurs véhicules de transport (24) et/ou de moyens de transport (31), une spécification de chaque véhicule de transport (24) ou de chaque moyen de transport (31) est déterminée individuellement par un dispositif de capteur (23) de la récolteuse (50) ainsi que par un dispositif de capteur (48) supplémentaire sur le point de déchargement (35), de sorte que l'adaptation de la hauteur de remplissage est réalisée individuellement pour chaque véhicule de transport (24) ou chaque moyen de transport (31).

14. Procédé selon l'une des revendications précédentes, **caractérisé en ce que** les valeurs de mesure générées par le dispositif de mesure (21) de la récolteuse (50) et le dispositif de mesure (36) supplémentaire sur le point de déchargement (35) sont transmises à un réseau d'ordinateurs (46) basé sur le cloud, en vue de l'échange réciproque et/ou de la détermination de la différence de quantités.

15. Système agricole destiné à la mise en oeuvre du procédé selon l'une des revendications précédentes, comprenant au moins un véhicule de transport (24) agricole ou un moyen de transport (31) tracté, avec un récipient (25, 32) et au moins une récolteuse (50) automotrice pour le travail sur un champ (33a, 33b), le récipient (25, 32) étant conçu pour recueillir la récolte (3) ramassée dans le champ par la récolteuse (50), au nombre d'au moins une, la récolte (3) étant transférée dans le récipient (25, 32) à l'aide d'un système de transbordement (51) de la récolteuse (50), jusqu'à atteindre une hauteur de remplissage prédéterminée, et étant transportée par le véhicule de transport (24) ou le moyen de transport (31) jusqu'à un point de déchargement (35) situé à distance, la récolteuse (50) comprenant un dispositif de mesure (21) qui détermine la quantité de récolte transférée depuis la récolteuse (50) dans le récipient (25, 32) et la transmet à une unité de commande (19), **caractérisé en ce que**, sur le point de déchargement (35), il est prévu un dispositif de mesure (36) supplémentaire qui est conçu pour déterminer une quantité de récolte déposée au point de déchargement (35) par le véhicule de transport (25) ou le moyen de transport (31), et qui transmet la quantité de récolte déterminée à l'unité de commande (19), en vue de la détermination d'une différence de quantités entre la quantité de récolte ramassée et la quantité de récolte transférée, et **en ce que** l'unité de commande (19) génère au moins un signal de commande pour l'adaptation de la hauteur de remplissage réalisée par le système de transbordement (51), en fonction de la différence de quantités déterminée.
